# EUROPEAN PATENT SPECIFICATION

(11) **EP 3 559 851 B1**
(45) Date of publication and mention of the grant of the patent: **02.12.2020**
(21) Application number: 17828924.5
(22) Date of filing: 22.12.2017
(51) Int. Cl.: G06F 21/55, G06F 21/56, G06F 21/57, H04L 29/06

(54) **METHOD FOR ORCHESTRATING REACTIONS TO COMPLEX ATTACKS ON COMPUTING SYSTEMS**
VERFAHREN ZUM ORCHESTRIEREN VON REAKTIONEN AUF KOMPLEXE ANGRIFFE AUF COMPUTERSYSTEME
PROCÉDÉ D'ORCHESTRATION DE RÉACTIONS À DES ATTAQUES COMPLEXES SUR DES SYSTÈMES ORDINATEURS

(30) Priority: 23.12.2016 LU 93398
(43) Date of publication of application: 30.10.2019
(73) Proprietor: Luxembourg Institute of Science and Technology (LIST), 4362 Esch/Alzette (LU)
(72) Inventor: OUEDRAOGO, Moussa, 6661 Born Luxembourg (LU)
(74) Representative: Wagner, Jean-Paul
(86) International application number: PCT/EP2017/084543
(87) International publication number: WO 2018/115514

(56) References cited:
- Sergio Caltagirone ET AL: "ADAM: Active Defense Algorithm and Model", , 8 December 2016 (2016-12-08), XP055352517, Retrieved from the Internet: URL:http://web.archive.org/web/20161208050 043/http://classstudio.com/papers/professi onal_papers/active_defense_v3_3.pdf [retrieved on 2017-03-07]
- C Onwubiko ET AL: "Response Mechanism for Defending Computer Networks", IJCSNS International Journal of Computer Science and Network Security, 31 August 2006 (2006-08-31), pages 36-42, XP055352520, Retrieved from the Internet: URL:http://paper.ijcsns.org/07_book/200608 /200608A06.pdf [retrieved on 2017-03-07]
- Sergio Caltagirone: "Evolving Active Defense Strategies", , 7 December 2016 (2016-12-07), XP055352521, Retrieved from the Internet: URL:http://web.archive.org/web/20161207130 811/http://classstudio.com/papers/professi onal_papers/evolve_ad_strategies.pdf [retrieved on 2017-03-07]

## Description

### Technical field

The present invention relates to the field of computer science and aims to enhance the security of computing systems such as computing devices or networks of computing devices, which have access to computing resources that may be attacked by third parties. In particular, the invention relates to enabling complex reactions in order to thwart complex threats or attacks on the computing resources, especially threats developing their effects along a prolonged time span and involving multiple computing resources.

### Background of the invention

It is known in the art to use specific control actions for addressing specific anomalous events detected on the computing resources of a computing system. The computing resources include for example a file system of a computing device, or a physical networking interface thereof. If a virus software having a known signature is detected in the filesystem, an antivirus software installed on the computing system may readily eradicate the source of the threat and quarantine any infected files. This action corresponds to a control action. Similarly, if an anomalous networking activity is detected on a networking port of the filesystem, a firewall device or software of the computing system may block the corresponding port, corresponding to another control action. Patent document EP 2 955 895 A1 discloses the association of a threat identifier with a set of control actions.

While known methods and products for both the protection and the detection of computing systems are pervasively adopted in nearly all organisations and personal computers, the elaboration of a reaction strategy remains in most cases human-led and presents some inadequacy as to the way they are enforced. The rationale for this is two-fold.

First, it is difficult to address complex attacks on computing systems using known control actions, as such attacks often comprise seemingly unrelated observations of isolated anomalous events among several computing resources, expanding over weeks or even months. For example, a phishing attack may comprise the reception of spear-headed e-mail, which installs a malware program on the computing device. Several weeks or months later, the malware may listen for messages on a predetermined networking port or transmit private data from the computing system to a third party. If a single anomalous event may be addressed by a single control action, future effects of the detected event may go undetected in the computer system, where the attack may continue to develop.

Second, the execution of predetermined identified control actions is often the end game, before the human administrator is notified in case of failure. Once a set of control actions fails to thwart an attack, the reaction to the threat is deemed to have failed, even though other options/control actions may well be available to the computing system, and may be able to address said threat successfully.

Sergio Caltagirone et al., "ADAM: Active Defense Algorithm and Model", 8 December 2016 (2016-12-08), (XP055352517), discloses automated threat response.

### Technical problem to be solved

It is an objective of the present invention to provide a method and system which overcomes at least some of the disadvantages of the prior art. Specifically, the invention aims at orchestrating complex reaction strategies to known and yet unknown threats, especially developing over prolonged times spans, by leveraging a plurality of control actions that are available to the attacked computing system.

### Summary of the invention

The invention provides a method for orchestrating a reaction to a threat to a computing system, the computing system having access to computing resources. The method comprises the following steps:
a) providing information on a first state of said computing resources using monitoring means, the information corresponding to the state of said computing resources prior to the identification of a threat, in a memory element;
b) providing a database associating at least one threat identifier, comprising a set of anomalous events being detectable on said computing resources, with at least one corresponding reaction strategy, each reaction strategy comprising a structured set of control actions to be executed by said computing system, and wherein each reaction strategy is associated with a score indicating the efficiency of said reaction strategy for successfully addressing said threat;
c) using detection means, detecting an anomalous event or set of anomalous events on at least one of said computing resources;
d) selecting from said database, using selection means, at least one reaction strategy that is associated with a threat identifier at least partially matching the detected anomalous events, said reaction strategy having the highest associated score;
e) scheduling, using scheduling means, the set of control actions corresponding to the selected reaction strategy to be executed by said computing system;
f) providing information on a second state of said computing resources using the monitoring means, the information corresponding to the state of said computing resources after execution of said control actions;
g1) if the second state does not substantially match the first state, associating said reaction strategy with a score indicating a low efficiency for addressing said identified threat, and repeating steps e)-f) by selecting, using said selection means, the reaction strategy being associated with the same identified threat and having the next highest associated score;
g2) if the second state substantially matches the first state, associating said reaction strategy with a score indicating a high efficiency for addressing said identified threat.

Preferably a control action may comprise the execution any of an antivirus software, a firewall, a port scanner to which the computing system has access. Further preferably, a control action may comprise monitoring and/or detection means of at least one computing resource.

Preferably, a set of control actions partially matches detected anomalous events, if the set of control actions is at least capable of successfully reacting to a subset of the detected anomalous events.

Preferably, the complete information describing the first and second states is being compared, and the states substantially match if a common subset of the information comprised in both states is the same or corresponds. Preferably, the common subset comprises the state information that led to the detection of anomalous events. Alternatively, only partial state information is compared.

Threat identifiers and sets of events associated therewith may preferably be retrieved from at least one repository node in a communication network, said repository node storing known threat identifiers.

Preferably, all available control actions available at the computing device may be catalogued in an inventory stored in a memory element to which the computing device has access. The inventory may further comprise information on the relationship between control actions, such as, but not limited to: equivalence, conditional execution, sequential execution in time, etc... Alternatively, the relationship information may be stored in a separate database, the information of which may be merged with the control action inventory upon generation of a reaction strategy.

Preferably, the step of providing said database may further comprise:
- matching, using matching means, at least one known threat identifier with at least one control action that is available on said computing device;
- generating, using generating means, one reaction strategy for each set of control actions available on said computing device, which is suitable for addressing the anomalous events associated with a given threat identifier;
- associating said threat identifier together with said reaction strategies in said database.

Reaction strategies comprising different but equivalent control actions available on said computing device, may preferably be associated with an initially similar or equal efficiency score in said database.

Preferably, the structured set of control actions may be a structured sequence of control actions. Further preferably, the set of anomalous events may be a sequence of anomalous events.

A control action may be available directly on said computing system or it may be accessible from a remote computing device to which the computing system has access. Control actions may further be retrieved and/or installed on the computing system if they are required for building a reaction strategy facing a given threat.

The method may further preferably comprise, upon selection of threat identifier that partially matches said anomalous events, creating a new threat identifier in said database, corresponding to the detected anomalous events, and associating any reaction strategies that are associated with said partially matching threat identifier, with said newly created threat identifier.

Preferably, the resulting state of the computing resources may be compared to the first state after execution of at least one control action comprised in said selected reaction strategy, and the reaction strategy may be considered to be unsuccessful if the compared states do not substantially match.

The first and second states may preferably comprise a description of the state of each computing resource monitored by the monitoring means. The description may preferably be in text form. The first and second states may further preferably comprise a hash value that is computed from the information describing the state of at least one, or preferably each of the computing resources monitored by the monitoring means. Further, the first and second states may comprise a time stamp indicating the time at which they were evaluated.

Preferably, the monitoring, detection, selection, scheduling, generating and matching means may comprise a data processor configured by appropriate program code, for example to periodically fetch information on the state of the computing resources, and to compare the state to an earlier state stored in a memory element to which the data processor has access. The data processor may also have access to a memory element comprising information describing events deemed to be anomalous, said information being used by the processor to identify anomalous events.

The computing resources may preferably comprise any of a file system, storage means, networking means, imaging means, processing means, display means or printing means. The storage means may comprise any memory element such as a hard disk drive, solid state drive, or a Random-Access Memory, RAM, module. The networking means may comprise a networking interface of the computing systems. The imaging means may comprise an image sensor or scanner. The processing means may comprise a processor, such as a Central Processing Unit, CPU, of the computing device. The display means may comprise a screen or projector. The printing means may comprise a printer or plotter.

A reaction strategy may preferably comprise a plurality of control actions, of which at least one control action is scheduled to be executed conditionally on the prior execution of at least one other control action.

A reaction strategy may impose a structured organization on a set of control actions.

Said computing system may preferably comprise a computing device, such as a personal computer, or a plurality of computing devices of a data communication network.

It is a further object of the invention to provide a computer program comprising computer readable code means, which when run on a computer, causes the computer to carry out the method according to the invention.

It is another object of the invention to provide a computer program product comprising a computer-readable medium on which the computer program according to the invention is stored.

Finally, it is also an object of the invention to provide a computer configured for carrying out the method according to the present invention.

By using the method in accordance with the present invention, it becomes possible for a computing system to efficiently and autonomously orchestrate all available control actions (either available directly or through a network connection to a third-party system) within the computing system, when the latter is faced with an attack, possibly extending in time and involving anomalous events that may be detected on different computing resources thereof. The method learns from previous behaviour, so that a once successful reaction strategy is more likely to be selected on future occurrences of similar threats. Further, if a known reaction strategy does not have the expected success in addressing the threat, for example because the threat is not completely identical to a known threat, the method goes on to automatically try any available combinations of control actions in order to autonomously find a reaction strategy that is successful. The invention therefore efficiently explores all possible control actions to build complex reaction strategies extending over a prolonged time, that the computing device may implement to thwart a detected attack, even if the attack is characterized by a previously unknown signature. By providing the computing system with the capability to auto-generate, and amend reactions strategies based on information collected by detection and monitoring means, the invention also purports to offer a better leverage in matching the speed of attacks.

### Brief description of the drawings

Several embodiments of the present invention are illustrated by way of figures, which do not limit the scope of the invention, wherein:

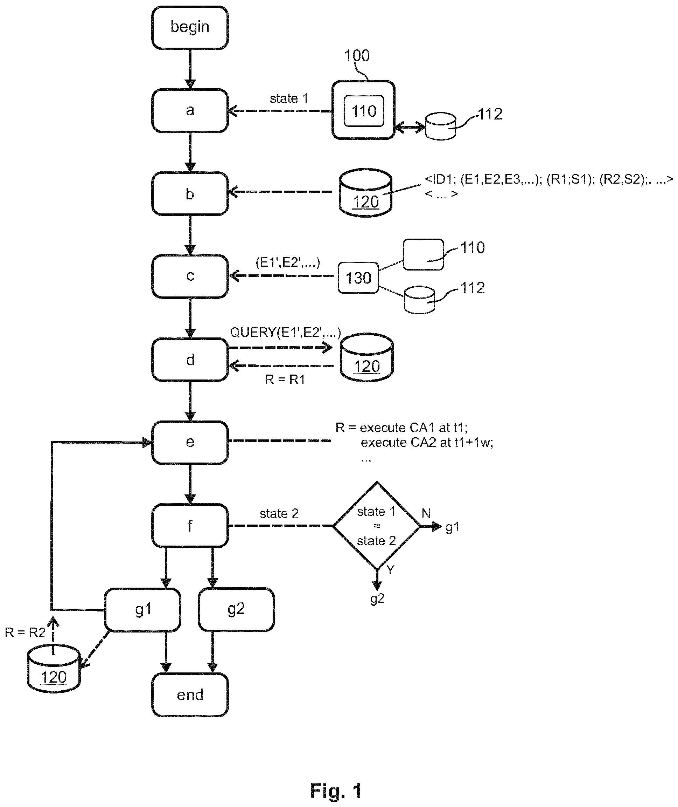

- figure 1 provides an illustration of the main method steps in accordance with a preferred embodiment of the invention.

### Detailed description of the invention

This section describes features of the invention in further detail based on preferred embodiments and on the figures, without limiting the invention to the described embodiments. Unless otherwise stated, features of one described embodiment may be combined with additional features of another described embodiment.

Figure 1 outlines the main steps in accordance with a preferred embodiment of the method according to the invention. A computing system 100 comprises computing resources 110, 112. The computing system may be personal computer, or it may be formed of plurality of computers communicating within a computer network, such as a Local Area Network, LAN. The computing resources comprise any software and hardware resources accessible by the computing system, including but not limited to storage means, printing means, display means, networking means, filesystems, processes and imaging means.

At step a) of the method, a first snapshot of the computing system's state is taken by monitoring means, which are preferably implemented by a process being executed by an operating system of the computing system. The first snapshot or state provides information on the state of the computing resources 110, 112 prior to the identification of a threat. The snapshot is preferably stored in textual form in a log-file secured in a memory element.

In accordance with step b), a database 120 is accessible to the computing system 100. The database is either stored locally on a memory element of the computing system, or on a remote node in a communication network to which the computing system has access. The database associates at least one threat identifier ID1 with at least one corresponding reaction strategy R1, R2.

A threat identifier or signature comprises a set or sequence of anomalous events E1, E2, E3, ... that may be detected on said computing resources 100, 112, and that characterize a particular threat. An anomalous event is an event that deviates from the expected behavior of a computing resource during normal operation thereof. For example, an anomalous event may consist in the reception of data traffic on a port of a networking interface, which is not used during normal operation of the computing device. Alternatively, an anomalous event may consist in the presence of a computer program in a file system or memory element, while the administrator or user of the computer system did not authorize the installation of the program. Other instances of anomalous events are well known in the art. Threat identifiers/signatures are preferably retrieved from repository services available on the Internet either for free or through a commercial subscription.

A reaction strategy R1, R2 organizes the execution of a set of control actions that are available at the computing device 100 in time, in order to leverage their combined efficiency when the computing system is faced with a particular threat. A control action comprises for example the execution of an antivirus software, the action of isolating a specific file, or monitoring a specific port of a communication interface of the computing device. A control action is agnostic of the complexity of an ongoing attack, while a reaction strategy aims at taking into account the long-term evolution of the attacked computing systems.

According to a preferred embodiment, an inventory of available control actions is provided at the computing device. The inventory may comprise several equivalent control actions, for example, several available antivirus programs. The inventory may further provide explicit structures to be observed between several control actions: a first control action may be equivalent to a second control action; a first control action may be executed conditionally on the prior execution of at least one second control action, etc... If efficiency information for the control actions is available, a control action efficiency score may be associated with each control action.

Based on a threat identifier retrieved from a repository, the method preferably matches any set or sequence of available control actions available to the computing system, in order to build a set of reaction strategies that the method may use to react to the threat. For example, if two equivalent control actions are available for implementing a reaction to the threat, two separate reaction strategies, comprising each only one of the two control actions, are generated. The reaction strategies comprise therefore each a structured sequence of at least one control action. An effectiveness score S1, S2 is associated with each generated reaction strategy. The effectiveness score reflects a reaction strategy's ability to thwart a given threat. Without prior knowledge on the effectiveness of several reaction strategies generated for the same threat identifier, the scores for all such reaction strategies are initialized to the same value. Apart from effectiveness, the score may further reflect a reaction strategy's efficiency, i.e., an indication of the complexity required to execute the strategy, comprising for example the number of control actions involved, the time and process cycle cost, etc. Alternatively, the efficiency and effectiveness indications are reflected by separate independent score values. If prior knowledge on the effectiveness/efficiency of different reaction strategies is available, for example through use of a publicly available data repository, the corresponding score values may alternatively be used. While other data structures are within the scope of the present invention, figure 1 suggest to store the described information for a given threat identifier ID1 in a database record linking the identifier to its sequence of events (E1, E2, E3) and to tuples associating the available reaction strategies R1, R2 to their respective initial efficiency/effectiveness scores for reacting to threat ID1:S1, S2. The scores S1, S2 relate to the efficiency/effectiveness of the complete reaction strategies R1, R2 given threat ID1. These scores are not the same as the control action efficiency scores that are associated with control actions in the control action inventory.

The inventory of control actions may contain more than one potential actions with efficiency indicators/scores, to be carried out given a particular anomalous event or sequence of events. These control actions are preferably grouped in the control action inventory using the logical connector **IN ORDER.** Alternatively, any structure among available control actions is stored in a separate database, and both resources, the control action repository and the database containing said structure, are used when building a structured reaction strategy. When building reaction strategies, they will be used with the control actions ordered by their previously observed control action efficiency score. This could be the case in instances where more than one antivirus software programs from different vendors and having potentially different effectiveness, would be available in the system for thwarting an incident resulting from malware infection. The antivirus with the highest estimated effectiveness score will be used first in priority, before the other is launched.

For an anomalous event or sequence of events with more than one control actions available in the control action inventory with the same efficiency score, the logical connector ANY will be used. In such a case, other determining factors, for example the effectiveness score, could be considered as to which of those control actions should be privileged.

Most modern attacks are characterised as multi-staged whereby the bid to take control and compromise security is done in multiple steps, with each stage aiming to achieve a certain milestone (sub-goal) for the attacker. In such cases, a plethora of control actions may be required for mitigating the impact of the threat for each of these different stages. In that vein of ideas, the reaction strategy will leverage a logical connector with a clear triggering action (or event) and/ or terminating action (or event) such as the **BETWEEN** and **IN** logical connectors. The former will be used when a control action has to be launched after a specific triggering action or milestone has been detected, respectively reached without the need of upper-bounding action to take place. Instead, the **IN** connector will be adopted when a control action will have to be used strictly between two actions/events/milestones. Both triggering and terminating actions may not be consecutive actions.

In circumstances where several control actions of different kinds are simultaneously required to mitigate a threat, the connector **PART OF** will be resorted for combining the effect of k number of controls actions over n possible solutions.

In parallel, a number of logical connectors may be used to help rate the effectiveness and subsequently manage the list of control actions available in the control action inventory. For instance, suppose a certain control action has been used a number of time without success over a certain time line. The connector **OVER TIME** can then be used to determine such a pattern and be instrumental in decision making about such control in future incident. Simultaneously, connectors such as **MORE, LESS, EQUAL** will be used to determine whether the success, failure rate of a control action is above or below a certain threshold that would be ultimately used to rank up the controls within the control action inventory and determine the likelihood of its future use. Furthermore, the usage of a **COMPARATOR** connector which takes as input two actions and a connector (MORE, LESS, EQUAL, MORE or EQUAL, LESS or EQUAL) enables the comparison between two control actions which can further support the future prioritisation amongst the control actions for the resolution of future incidents.

At step c), as shown in figure 1, an anomalous event or a sequence of anomalous events E1', E2' is detected on one or more of the computing resources 110, 112, using detection means 130 of the computing system 100.

At step d), the database 120 is queried for the presence of a reaction strategy that corresponds to the detected sequence/set of anomalous events. If the threat is known, the detected events correspond to a known sequence/set of events, for example E1'=E1, E2'= E2, E3'=E3. In such case, based on the depicted example, the threat is identified as having ID1 in the database, and the database returns the previously stored reaction strategy R1, or a plurality of such reaction strategies, with their score S1 indicating the highest efficiency among all available reaction strategies for threat ID1. If a partial match is found in the database 120, e.g., the detected threat starts with anomalous event E1'=E1 but goes on with E2' different from E2, while the closest match corresponds to threat identifier ID1=(E1, E2), then a new threat ID is created in the database 120, and associated with the detected signature (E1, E2'). In order to address this unknown threat, any reaction strategies associated with the similar threat ID 1 are copied to the new threat ID.

At step e), the method schedules the control actions as organized by the retrieved reaction strategy to be executed in time. In the shown example, control action CA1 is scheduled to be executed at time t1, while control action CA2 is scheduled to be executed one week later.

At step f) a new snapshot of the computer system's computing resources is made and compared to the initial snapshot provided at step a). If the two snapshots substantially match, the selected reaction strategy is deemed to have been successful in thwarting the detected threat, and its associated efficiency score is set to a value indicating a high efficiency. This corresponds to step g2). A substantial match of the snapshots or states is determined if those state indicators affected by the detected anomalous events have been reverted to their initial state. If that is not the case, the reaction strategy is deemed to have not been successful, corresponding to step g1), wherein the associated efficiency score is set to a value representing a low efficiency for thwarting the identified threat. Through this learning mechanism, the method builds on its experience to improve over time. The method then goes on to retrieve the reaction strategy associated with the identified threat ID and having the next highest efficiency score from the database 120. If the finally successful reaction strategy has been adapted from a reaction strategy initially retrieved from the database 120, through learning loop starting at step g2), the resulting reaction strategy is stored and added to the reaction strategies associated with the detected thread ID in the database 120.

According to a preferred embodiment, a snapshot of the state of the computing resources is made after at least one, or preferably each one of the control actions in the selected reaction strategy has been executed. The snapshot after execution of the control action is compared to the initial state provided at step a). If the state of the resource which should be restored to normal by the given control action has indeed been restored, the reaction strategy is applied further. If the state of the resource which should be restored to normal by the given control action still remains anomalous after execution thereof, the control action, and thereby the reaction strategy, is deemed to have failed. Failure of a control action may preferably be determined after a predetermined number of execution attempts or based on the conditional/parallel execution of other control actions within the selected reaction strategy. This approach allows to switch and adapt the implemented reaction strategy early. The method then goes on to retrieve the reaction strategy associated with the identified threat ID and having the next highest efficiency score from the database 120, implementing an alternative to the failed control action. If all available reaction strategies have been unsuccessfully explored, the method may follow up by requesting any further control actions from a control action repository node in a communication network to which the computing system has remote access, in order to use this newly available control action(s) in a new reaction strategy. If such an approach also fails to successfully thwart the identified threat, a corresponding alerting message may be generated and transmitted to an administrator of the computing system.

The approach taken by the invention efficiently uses all control actions available at a computing system in order to try to mitigate the threat that has been identified, even if that threat was previously not known.

A specific practical example highlighting the efficiency of the method is provided here below. Most attacked directed towards organisation and individuals alike begin typically use targeted spear-phishing emails with malware to gain a foothold in the system. In the face of the risk posed by such advance persistent threats, the reaction strategy would first look at the control action inventory and select those control actions available for handling a spear-phishing threat. In doing so it is assumed that the control action inventory comprises information that systematically sets up the system in a way that suspicious emails detected by the spam filter are automatically flagged; the attachment wrap up as a .zip or .rar file with caution for the final recipient. Should there be an attempt to open the attachment, which would be considered as triggering a further anomalous event, a control action for automatically launching sequentially (per their efficiency index) the two types of anti-viruses available for the system for vetting the payload is conducted. Assuming the vetting process returns a negative outcome as to the presence of a malicious content, the reaction strategy, given the initial suspicion, will set a number of control actions on standby especially given that the non-detection of any malicious content may be due to the antivirus ineffectiveness or the stealth nature of malware involved in the incident. Consequently, the reaction strategy would trigger activities from the relevant existing detection capability that can be associated to a malware still by considering the control action inventory. This may result in the launch Security information and event management, SIEM, such as SPLUNK™, QRADAR™ or ARCSIGHT™ for monitoring events from sensitive data repositories, integrity monitors such as Samhain for checking the integrity of the system files as well as files considered relevant for the computing system's owner. Once implanted in a system, the malware would often be communicating with external source whereby vital information related to the compromised system or its stakeholder will be sent to. In that vein of idea, other control actions related to traffic analysis such as Wireshark™, Netflow™ or other would undertake traffic some analysis of ingress and egress traffic in view of understanding whether sensitive data or other information of some relevance are being siphoned to external source and retrospectively if such external source is engaging in any unauthorised remote action in the midst of the system. The set of outcomes derived from the control actions taken by the traffic analysers, file integrity checker and SIEM tools will command the undertaking of specific actions aiming at either quarantining or restoring files, interrupting connections or amending access control privileges and the like.

The algorithms outlined here above, for example for building reaction strategies or scheduling control actions, are implemented using processing means that are by appropriately programmed, or by specific analogue circuitry, as it is known in the art. The skilled person is capable of providing such programming code means or circuitry providing the required functionality based on the description that has been given.

It should be understood that the detailed description of specific preferred embodiments is given by way of illustration only, since various changes and modifications within the scope of the invention will be apparent to the skilled person. The scope of protection is defined by the following set of claims.

## Claims

1. A method for orchestrating a reaction to a threat to a computing system (100), the computing system having access to computing resources (110, 112), the method comprising the following steps:
a) providing information on a first state of said computing resources using monitoring means, the information corresponding to the state of said computing resources prior to the identification of a threat, in a memory element;
b) providing a database (120) associating at least one threat identifier, comprising a set of anomalous events (E1, E2, E3, ...) being detectable on said computing resources (110, 112), with at least one corresponding reaction strategy (R1, R2), each reaction strategy comprising a structured set of control actions to be executed by said computing system (100), and wherein each reaction strategy is associated with a score indicating the efficiency of said reaction strategy for successfully addressing said threat;
c) using detection means, detecting an anomalous event or set of anomalous events (E1', E2', ...) on at least one of said computing resources (110, 112);
d) selecting from said database (120), using selection means, at least one reaction strategy (R1) that is associated with a threat identifier at least partially matching the detected anomalous events (E1', E2', ...), said reaction strategy having the highest associated score;
e) scheduling, using scheduling means, the set of control actions corresponding to the selected reaction strategy to be executed by said computing system (100);
f) providing information on a second state of said computing resources using the monitoring means, the information corresponding to the state of said computing resources (110, 112) after execution of said control actions;
g1) if the second state does not substantially match the first state, associating said reaction strategy (R1) with a score indicating a low efficiency for addressing said identified threat, and repeating steps e)-f) by selecting, using said selection means, the reaction strategy being associated with the same identified threat and having the next highest associated score;
g2) if the second state substantially matches the first state, associating said reaction strategy with a score indicating a high efficiency for addressing said identified threat.

2. Method according to claim 1, wherein a control action comprises the execution any of an antivirus software, a firewall, a port scanner to which the computing system has access.

3. Method according to any of claims 1 or 2, wherein threat identifiers and sets of events associated therewith are retrieved from at least one repository node in a communication network, said repository node storing known threat identifiers.

4. Method according to any of claims 1 to 3, wherein the step of providing said database comprises:
- matching, using matching means, at least one known threat identifier with at least one control action that is available on said computing device;
- generating, using generating means, one reaction strategy for each set of control actions available on said computing device, which is suitable for addressing the anomalous events associated with a given threat identifier;
- associating said threat identifier together with said reaction strategies in said database.

5. Method according to claim 4, wherein reaction strategies comprising different but equivalent control actions available on said computing device, are associated with an initially similar or equal efficiency score in said database.

6. Method according to any of claims 1 to 5, wherein the method further comprises
- upon selection of threat identifier that partially matches said anomalous events, creating a new threat identifier in said database, corresponding to the detected anomalous events, and associating any reaction strategies that are associated with said partially matching threat identifier, with said newly created threat identifier.

7. Method according to any of claims 1 to 6, wherein the resulting state of the computing resources is compared to the first state after execution of at least one control action comprised in said selected reaction strategy, and wherein the reaction strategy is considered to be unsuccessful if the compared states do not substantially match.

8. Method according to any of claims 1 to 7, wherein said first and second states comprise a description of the state of each computing resource monitored by the monitoring means.

9. Method according to any of claims 1 to 8, wherein said computing resources comprise any of a file system, storage means, networking means, imaging means, processing means, display means or printing means.

10. Method according to any of claims 1 to 9 wherein a reaction strategy comprises a plurality of control actions, of which at least one control action is scheduled to be executed conditionally on the prior execution of at least one other control action.

11. Method according to any of claims 1 to 10, wherein said computing system comprises a computing device, or a plurality of computing devices of a data communication network.

12. A computer program comprising computer readable code means, which when run on a computer, causes the computer to carry out the method according to any of claims 1 to 11.

13. A computer program product comprising a computer-readable medium on which the computer program according to claim 12 is stored.

14. A computer configured for carrying out the method according to any of claims 1 to 11.

## Patentansprüche

1. Verfahren zum Orchestrieren einer Reaktion auf eine Bedrohung eines Computersystems (100), wobei das Computersystem Zugriff auf Computerressourcen (110, 112) hat, wobei das Verfahren die folgenden Schritte umfasst:
a) Bereitstellen, in einem Speicherelement, von Informationen über einen ersten Zustand der Computerressourcen unter Verwendung von Überwachungsmitteln, wobei die Informationen dem Zustand der Computerressourcen vor dem Erkennen einer Bedrohung entsprechen;
b) Bereitstellen einer Datenbank (120), welche mindestens eine Bedrohungskennung, welche einen Satz anomaler Ereignisse (E1, E2, E3, ...) umfasst die auf den Computerressourcen (110, 112) nachweisbar sind, mindestens einer entsprechenden Reaktionsstrategie (R1, R2) zuordnet, wobei jede Reaktionsstrategie einen strukturierten Satz von Steueraktionen umfasst, die von dem Computersystem (100) ausgeführt werden sollen, und wobei jeder Reaktionsstrategie eine Bewertung zugeordnet ist, die die Effizienz der Reaktionsstrategie zur erfolgreichen Bewältigung der Bedrohung angibt;
c) unter Verwenden von Erfassungsmitteln, Erfassen eines anomalen Ereignisses oder einem Satz von anomalen Ereignissen (E1 ", E2", ...) auf mindestens einer der Computerressourcen (110, 112);
d) unter Verwendung von Auswahlmitteln, mindestens eine Reaktionsstrategie (R1), aus der Datenbank (120) auswählen, die einer Bedrohungskennung zugeordnet ist, die zumindest teilweise mit den erfassten anomalen Ereignissen (E1', E2', ...) übereinstimmt, wobei diese Reaktionsstrategie die höchste zugehörige Bewertung hat;
e) unter Verwendung von Planungsmitteln, den Satz von Steueraktionen, die der ausgewählten Reaktionsstrategie entsprechen, zum Ausführen mittels des Computersystems (100) einplanen;
f) Bereitstellen von Informationen über einen zweiten Zustand der Computerressourcen unter Verwendung von Überwachungsmitteln, wobei die Informationen dem Zustand der Rechenressourcen (110, 112) nach Ausführung der Steueraktionen entsprechen;
g1) wenn der zweite Zustand nicht wesentlich mit dem ersten Zustand übereinstimmt, die Reaktionsstrategie (R1) mit einer Bewertung verknüpfen, die eine geringe Effizienz zur Bewältigung der identifizierten Bedrohung anzeigt, und Wiederholen der Schritte e) -f) wobei unter Verwendung der Auswahlmittel die Reaktionsstrategie die derselben identifizierten Bedrohung zugeordnet ist, und welche die nächsthöhere zugehörige Bewertung aufweist, ausgewählt wird;
g2) wenn der zweite Zustand im Wesentlichen mit dem ersten Zustand übereinstimmt, wird die Reaktionsstrategie mit einer Bewertung verknüpft, die eine hohe Effizienz für die Bewältigung der identifizierten Bedrohung anzeigt.

2. Verfahren nach Anspruch 1, wobei eine Steueraktion die Ausführung einer Antivirensoftware, einer Firewall oder eines Port-Scanners umfasst, auf die das Computersystem Zugriff hat.

3. Verfahren nach einem der Ansprüche 1 oder 2, wobei Bedrohungskennungen und damit verbundene Ereignissätze von mindestens einem Repository-Knoten in einem Kommunikationsnetzwerk abgerufen werden, wobei der Repository-Knoten bekannte Bedrohungskennungen speichert.

4. Verfahren nach einem der Ansprüche 1 bis 3, wobei der Schritt des Bereitstellens der Datenbank umfasst:
- unter Verwendung von Abgleichungsmitteln, abgleichen mindestens einer bekannten Bedrohungskennung mit mindestens einer Steueraktion, die auf der Computervorrichtung verfügbar ist;
- unter Verwendung von Erzeugungsmitteln, erzeugen einer Reaktionsstrategie für jeden Satz von Steueraktionen, die auf dem Computervorrichtung verfügbar sind, welche zum Behandeln der anomalen Ereignisse geeignet ist, die mit einer gegebenen Bedrohungskennung verbunden sind;
- Verknüpfen der Bedrohungskennung mit den Reaktionsstrategien in der Datenbank.

5. Verfahren nach Anspruch 4, wobei Reaktionsstrategien, die unterschiedliche, aber äquivalente Steueraktionen umfassen, die auf der Computervorrichtung verfügbar sind, mit einer anfänglich ähnlichen oder gleichen Effizienzbewertung in der Datenbank verknüpft sind.

6. Verfahren nach einem der Ansprüche 1 bis 5, wobei das Verfahren ferner umfasst
- bei Auswahl einer Bedrohungskennung, die teilweise mit den anomalen Ereignissen übereinstimmt, Erstellen einer neuen Bedrohungskennung in der Datenbank, die den erkannten anomalen Ereignissen entspricht, und Verknüpfen von Reaktionsstrategien, die der teilweise übereinstimmenden Bedrohungskennung zugeordnet sind, mit der neu erstellten Bedrohungskennung .

7. Verfahren nach einem der Ansprüche 1 bis 6, wobei der resultierende Zustand der Computerressourcen mit dem ersten Zustand nach Ausführung mindestens einer Steueraktion verglichen wird, die in der ausgewählten Reaktionsstrategie enthalten ist, und wobei die Reaktionsstrategie als erfolglos betrachtet wird, wenn die verglichenen Zustände nicht wesentlich übereinstimmen.

8. Verfahren nach einem der Ansprüche 1 bis 7, wobei der erste und der zweite Zustand eine Beschreibung des Zustands jeder durch die Überwachungseinrichtung überwachten Computerressourcen umfassen.

9. Verfahren nach einem der Ansprüche 1 bis 8, wobei die Computerressourcen ein Dateisystem, ein Speichermittel, ein Netzwerkmittel, ein Abbildungsmittel, ein Verarbeitungsmittel, ein Anzeigemittel oder ein Druckmittel umfassen.

10. Verfahren nach einem der Ansprüche 1 bis 9, wobei eine Reaktionsstrategie mehrere Steueraktionen umfasst, von denen geplant ist, dass mindestens eine Steueraktion unter der Bedingung ausgeführt wird, dass mindestens eine andere Steueraktion zuvor ausgeführt wird.

11. Verfahren nach einem der Ansprüche 1 bis 10, wobei das Computersystem eine Rechenvorrichtung oder mehrere Rechenvorrichtungen eines Datenkommunikationsnetzwerks umfasst.

12. Computerprogramm, das computerlesbare Codemittel umfasst, die, wenn sie auf einem Computer ausgeführt werden, den Computer veranlassen, das Verfahren gemäß einem der Ansprüche 1 bis 11 auszuführen.

13. Computerprogrammprodukt, umfassend ein computerlesbares Medium, auf dem das Computerprogramm nach Anspruch 12 gespeichert ist.

14. Computer, der zum Ausführen des Verfahrens gemäß einem der Ansprüche 1 bis 11 konfiguriert ist.

## Revendications

1. Procédé permettant d'orchestrer une réaction à une menace contre un système informatique (100), le système informatique ayant accès à des ressources informatiques (110, 112), le procédé comprenant les étapes suivantes:
a) fournir des informations sur un premier état desdites ressources informatiques en utilisant des moyens de surveillance, les informations correspondant à l'état desdites ressources informatiques avant l'identification d'une menace, dans un élément mémoire;
b) fournir une base de données (120) associant au moins un identificateur de menace, comprenant un ensemble d'événements anormaux (E1, E2, E3, ...) pouvant être détectés sur lesdites ressources informatiques (110, 112) avec au moins une stratégie de réaction correspondante (R1, R2), chaque stratégie de réaction comprenant un ensemble structuré d'actions de commande à exécuter par ledit système informatique (100), et dans lequel chaque stratégie de réaction est associée à un score indiquant l'efficacité de ladite stratégie de réaction pour résoudre avec succès ladite menace ;
c) moyennant des moyens de détection, détecter un événement anormal ou un ensemble d'événements anormaux (E1', E2', ...) sur au moins l'une desdites ressources informatiques (110, 112);
d) sélectionner à partir de ladite base de données (120), au moyen d'un moyen de sélection, au moins une stratégie de réaction (R1) associée à un identificateur de menace correspondant au moins partiellement aux événements anomaux détectés (E1', E2', ...), ladite stratégie de réaction ayant le plus haut score y associé;
e) programmer, en utilisant des moyens de planification, l'ensemble d'actions de commande correspondant à la stratégie de réaction sélectionnée à être exécutées par ledit système informatique (100);
f) fournir des informations sur un second état desdites ressources informatiques en utilisant les moyens de surveillance, les informations correspondant à l'état desdites ressources informatiques (110, 112) après l'exécution desdites actions de commande;
g1) si le second état ne correspond pas sensiblement au premier état, associer ladite stratégie de réaction (R1) à un score indiquant une faible efficacité pour adresser ladite menace identifiée, et répéter les étapes e) à f) en sélectionnant, en utilisant lesdits moyens de sélection, la stratégie de réaction étant associée à la même menace identifiée et ayant le prochain score le plus haut y associé;
g2) si le second état correspond sensiblement au premier état, associer ladite stratégie de réaction à un score indiquant une efficacité élevée pour adresser ladite menace identifiée.

2. Procédé selon la revendication 1, dans lequel une action de commande comprend l'exécution d'un logiciel antivirus, d'un pare-feu, d'un scanner de ports auquel le système informatique a accès.

3. Procédé selon l'une quelconque des revendications 1 ou 2, dans lequel des identificateurs de menace et des ensembles d'événements associés à ceux-ci sont récupérés à partir d'au moins un nœud de référentiel dans un réseau de communication, ledit nœud de référentiel stockant des identificateurs de menace connus.

4. Procédé selon l'une quelconque des revendications 1 à 3, dans lequel l'étape de fourniture de ladite base de données comprend:
- l'appariement, en utilisant des moyens d'appariement, d'au moins un identificateur connu de menace avec au moins une action de commande qui est disponible sur ledit dispositif informatique;
- générer, à l'aide de moyens de génération, une stratégie de réaction pour chaque ensemble d'actions de contrôle disponibles sur ledit dispositif informatique, qui convient pour adresser les événements anormaux associés à un identifiant de menace donné;
- l'association dudit identificateur de menace avec lesdites stratégies de réaction dans ladite base de données.

5. Procédé selon la revendication 4, **caractérisé en ce que** des stratégies de réaction comprenant des actions de contrôle différentes mais équivalentes disponibles sur ledit dispositif informatique, sont associées à un score d'efficacité initialement similaire ou égal dans ladite base de données.

6. Procédé selon l'une quelconque des revendications 1 à 5, dans lequel le procédé comprend en outre
- lors de la sélection d'un identificateur de menace qui correspond partiellement auxdits événements anormaux, créer un nouvel identificateur de menace dans ladite base de données, correspondant aux événements anomaux détectés, et y associer toutes les stratégies de réaction qui sont associées audit identificateur de menace partiellement apparié.

7. Procédé selon l'une quelconque des revendications 1 à 6, dans lequel l'état résultant des ressources informatiques est comparé au premier état après l'exécution d'au moins une action de commande comprise dans ladite stratégie de réaction sélectionnée, et dans lequel la stratégie de réaction est considérée comme étant échouée si les états comparés ne correspondent pas sensiblement.

8. Procédé selon l'une quelconque des revendications 1 à 7, dans lequel lesdits premiers et deuxièmes états comprennent une description de l'état de chaque ressource informatique surveillée par les moyens de surveillance.

9. Procédé selon l'une quelconque des revendications 1 à 8, dans lequel lesdites ressources informatiques comprennent l'un quelconque parmi un système de fichiers, des moyens de stockage, des moyens de mise en réseau, des moyens d'imagerie, des moyens de traitement, des moyens d'affichage ou des moyens d'impression.

10. Procédé selon l'une quelconque des revendications 1 à 9, dans lequel une stratégie de réaction comprend une pluralité d'actions de commande, dont au moins une action de commande est programmée pour être exécutée conditionnellement sur l'exécution préalable d'au moins une autre action de commande.

11. Procédé selon l'une quelconque des revendications 1 à 10, dans lequel ledit système informatique comprend un dispositif de calcul, ou une pluralité de dispositifs de calcul d'un réseau de communication de données.

12. Programme informatique comprenant des moyens de code lisibles par ordinateur qui, lorsqu'ils sont exécutés sur un ordinateur, amènent l'ordinateur à mettre en œuvre le procédé selon l'une quelconque des revendications 1 à 11.

13. Produit de programme informatique comprenant un support lisible par ordinateur sur lequel le programme d'ordinateur selon la revendication 12 est enregistré.

14. Ordinateur configuré pour la mise en œuvre du procédé selon l'une quelconque des revendications 1 à 11.
